# EUROPEAN PATENT SPECIFICATION

(11) **EP 3 176 776 B1**
(45) Date of publication and mention of the grant of the patent: **02.12.2020**
(21) Application number: 16195073.8
(22) Date of filing: 21.10.2016
(51) Int. Cl.: G09G 3/34, H05B 47/11, H05B 47/19

(54) **LUMINANCE ADJUSTING METHOD AND APPARATUS, COMPUTER PROGRAM AND RECORDING MEDIUM**
LUMINANZANPASSUNGSVERFAHREN UND -VORRICHTUNG, COMPUTERPROGRAMM UND AUFZEICHNUNGSMEDIUM
PROCÉDÉ ET APPAREIL DE RÉGLAGE DE LUMINANCE, PROGRAMME INFORMATIQUE ET SUPPORT D'ENREGISTREMENT

(30) Priority: 01.12.2015 CN 201510867032
(43) Date of publication of application: 07.06.2017
(73) Proprietor: Xiaomi Inc., Beijing 100085 (CN)
(72) Inventor: JIA, Weiguang, Haidian District, Beijing 100085 (CN); REN, Tian, Haidian District, Beijing 100085 (CN); HOU, Enxing, Haidian District, Beijing 100085 (CN)
(74) Representative: Steinbauer, Florian

(56) References cited:
- CN-A- 104 039 040
- CN-A- 104 252 327
- JP-A- 2013 191 380
- US-A1- 2013 241 439
- US-A1- 2015 116 207
- US-A1- 2015 282 282

## Description

### TECHNICAL FIELD

The present invention is related to radio communication technologies, and more particularly, to a luminance adjusting method and apparatus, a computer program and a recording medium.

### BACKGROUND

Nowadays, with the popularization of smart phones and tablets, more and more users love reading using electronic devices. However, when users read using electronic devices under indoor light which is too dark or bright, their eyesight will be harmed.

US 2015/282282 A1 discloses a computing device communicating with luminaries. A user does not need to control individual luminaries in order to adjust the luminance or brightness, but can choose regions or zones in a room to control an ambient brightness in these regions or zones. For the luminaries there is a reading preset, where the luminance of the luminaries is set such that a brightness in a certain region or zone is adapted for a user to read a book.

US 2013/241439 A1 discloses that ambient lighting is controlled by a smart phone of a worker. If a smart phone is in an on state, an application for lighting control is started and a predetermined command for dimming ambient lighting is transmitted. If a smart phone is in an off state, a predetermined command for returning ambient lighting to original state is transmitted.

US 2015/116207 discloses that a light sensor is provided for sensing ambient light. A control unit is provided for determining whether human eyes gaze at a screen. When the control unit determines that the human eyes gaze at the screen over a predetermined time it further adjusts the screen to enter an eye protection mode according to the ambient light.

CN 104 252327 A discloses that an ambient brightness is determined and a screen brightness is adjusted according to the ambient brightness in order to optimize a reading mode.

CN 104039040 discloses that an intelligent lamp may be automatically controlled. The method regulates, improves the brightness of user place environment, so compared with correlation technique, can avoid the high light of mobile terminal screen in dark surrounds to the stimulation of eyes, reduce the infringement of the eye health to user.

### SUMMARY

The invention is as defined in the independent claims. Accordingly, embodiments of the present invention provide a luminance adjusting method and apparatus, a computer program and a recording medium. The technical solutions are as below.

According to a first aspect of embodiments of the present invention, there is provided a luminance adjusting method for adjusting a luminance of a luminance-adjustable illuminating device in an indoor environment where a terminal comprising a display is located according to claim 1.

Optionally, said adjusting the luminance of the illuminating device corresponding to the device identification based on the preset ambient brightness comprises: periodically acquiring a current ambient brightness of the indoor environment where the terminal is located; and adjusting the luminance of the luminance-adjustable illuminating device based on the current ambient brightness and the preset ambient brightness.

Optionally, said adjusting the luminance of the luminance-adjustable illuminating device corresponding to the device identification based on the preset ambient brightness comprises: generating a luminance adjusting instruction based on the preset ambient brightness; and sending the luminance adjusting instruction to the luminance-adjustable illuminating device corresponding to the device identification, so as to adjust the luminance of the luminance-adjustable illuminating device.

Optionally, said sending the luminance adjusting instruction to the illuminating device corresponding to the device identification comprises: sending the luminance adjusting instruction and the device identification to a network, via which the luminance adjusting instruction is forwarded to the illuminating device.

Optionally, the method further comprises generating the first state instruction in response to a time period during which the terminal runs a preset application being longer than or equal to a preset duration.

Optionally, the method further comprises: in response to receiving the first state instruction, acquiring a preset display parameter value corresponding to the reading mode, the preset display parameter value comprising at least one of a resolution, a contrast and a luminance; and adjusting a display parameter of the terminal based on the preset display parameter value.

Optionally, the method further comprises: in response to receiving a second state instruction instructing the terminal to exit the reading mode, acquiring a historical display parameter value of the terminal, the value being used before said adjusting is performed; and adjusting the display parameter of the terminal based on the historical display parameter value.

According to a second aspect of the embodiments of the present invention, there is provided a terminal for adjusting a luminance of a luminance-adjustable illuminating device in an indoor environment where a terminal comprising a display is located according to claim 6.

Optionally, the first adjusting module comprises: a second acquiring sub-module configured to periodically acquire a current ambient brightness of the indoor environment where the terminal is located, and a second adjusting sub-module configured to adjust the luminance of the luminance-adjustable illuminating device based on the current ambient brightness acquired by the second acquiring sub-module and the preset ambient brightness acquired by the first acquiring module.

Optionally, the first adjusting module comprises: a generating sub-module configured to generate a luminance adjusting instruction based on the preset ambient brightness acquired by the first acquiring module, and a sending sub-module configured to send the luminance adjusting instruction generated by the generating sub-module to the luminance-adjustable illuminating device corresponding to the device identification, so as to adjust the luminance of the luminance-adjustable illuminating device.

Optionally, the sending sub-module is further configured to send the luminance adjusting instruction generated by the generating sub-module and the device identification acquired by the second acquiring module to a network, via which the luminance adjusting instruction is forwarded to the illuminating device corresponding to the device identification.

Optionally, the terminal further comprises a generating module configured to generate the first state instruction in response to a time period during which the terminal runs a preset application being longer than or equal to a preset duration.

Optionally, the terminal further comprises: a third acquiring module configured to, in response to receiving the first state instruction generated by the generating module, acquire a preset display parameter value corresponding to the reading mode, the preset display parameter value comprising at least one of a resolution, a contrast and a luminance; and a second adjusting module configured to adjust a display parameter of the terminal based on the preset display parameter value acquired by the third acquiring module.

Optionally, the terminal further comprises a fourth acquiring module configured to, in response to receiving a second state instruction instructing the terminal to exit the reading mode, acquire a historical display parameter value of the terminal, the value being used before said adjusting is performed. The second adjusting module is further configured to adjust the display parameter of the terminal based on the historical display parameter value acquired by the fourth acquiring module.

In one particular embodiment, the steps of the luminance adjusting method are determined by computer program instructions.

Consequently, according to a fourth aspect, the invention is also directed to a computer program for executing the steps of a luminance adjusting method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions of the embodiments of this invention may produce the following advantageous effects.

In an embodiment of the present invention, when a user uses reading software or a browser of a terminal for a certain duration or longer, it is determined that the terminal is in a reading mode. Then, adjustment of ambient brightness is triggered. The terminal or a server acquires a preset ambient brightness for the reading mode that is conducive to protecting the user's eyesight and a device identification of an indoor illuminating device, and controls the illuminating device to adjust its luminance, so that a current ambient brightness reaches the preset ambient brightness. By doing so, a difference between the ambient brightness and a luminance of the terminal's electronic screen is reduced, so that the ambient brightness is more suitable for the user's electronic reading and the user's eyesight can be protected.

Advantageously, if the current ambient brightness is lower or higher than the preset ambient brightness, the luminance of the illuminating device will be adjusted, so that indoor light will not be too bright or too dark but more suitable for the user's electronic reading and the user's eyesight can be protected.

Advantageously, the difference between the indoor illuminating brightness and the luminance of the terminal's electronic screen is kept small during the user's reading, so that the indoor illuminating brightness is suitable for the user's electronic reading all the time and the user's eyesight can be protected.

Advantageously, the luminance of the illuminating device is adjusted by a luminance adjusting instruction, so that indoor light will not be too bright or too dark but more suitable for the user's reading and the user's eyesight can be protected.

Advantageously, when the terminal is in the reading mode, it also adjusts its display parameter, such as a resolution, a contrast, a luminance, etc., so that the burden on the user's eyes adapting themselves for reading on the electronic screen can be reduced and the user's eyesight can be protected.

In still a further embodiment, the terminal stores a historical display parameter value which is used before the terminal enters the reading mode, and reverts to the previous display setting based on the stored historical display parameter value when the terminal exits the reading mode, so that the user can use other applications of the terminal conveniently, thereby improving the user experience.

It should be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a luminance adjusting method according to an embodiment;
Fig. 2 is a flow chart showing a luminance adjusting method according to another embodiment;
Fig. 3 is a flow chart showing a luminance adjusting method according to yet another embodiment;
Fig. 4 is a flow chart showing a luminance adjusting method according to still another embodiment;
Fig. 5 is a flow chart showing a luminance adjusting method according to still yet another embodiment;
Fig. 6 is a flow chart showing a luminance adjusting method according to a further embodiment;
Fig. 7 is a flow chart showing a luminance adjusting method according to yet a further embodiment;
Fig. 8 is a flow chart showing a luminance adjusting method according to still a further embodiment;
Fig. 9 is a block diagram of a luminance adjusting apparatus according to an embodiment;
Fig. 10 is a block diagram of a first adjusting module according to an embodiment;
Fig. 11 is a block diagram of a first adjusting module according to another embodiment;
Fig. 12 is a block diagram of a first adjusting module according to yet another embodiment;
Fig. 13 is a block diagram of a luminance adjusting apparatus according to another embodiment;
Fig. 14 is a block diagram of a luminance adjusting apparatus according to yet another embodiment;
Fig. 15 is a block diagram of a luminance adjusting apparatus according to still another embodiment;
Fig. 16 is a block diagram of a luminance adjusting apparatus according to still yet another embodiment; and
Fig. 17 is a block diagram of a luminance adjusting apparatus according to a further embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise presented. The embodiments set forth in the following description of embodiments do not represent all embodiments consistent with the invention. Instead, they are merely examples of apparatuses and methods consistent with aspects related to the invention as recited in the appended claims.

The technical solutions provided by the embodiments of the present invention relate to a terminal and a server. The terminal or the server controls a smart illuminating device to adjust its luminance based on an ambient brightness in an environment where the terminal is located, so that indoor ambient brightness is more suitable for a user to read using an electronic device, a better reading environment can be provided and the user's eyesight can be protected.

The terminal may be any device with an electronic reading function, such as a mobile phone, a computer, a digital broadcast terminal, a messaging device, a gaming console, a tablet, a medical device, exercise equipment, a personal digital assistant, etc.

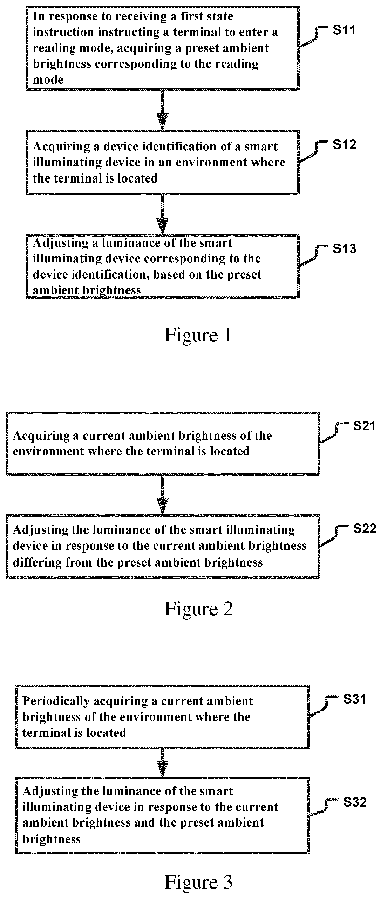

Fig. 1 is a flow chart showing a luminance adjusting method according to an embodiment. As shown in Fig. 1, the luminance adjusting method is used in a server or a terminal and comprises the following steps.

In step S11, in response to receiving a first state instruction instructing a terminal to enter a reading mode, a preset ambient brightness corresponding to the reading mode is acquired.

In step S12, a device identification of a smart illuminating device in an environment where the terminal is located is acquired.

In step S13, a luminance of the smart illuminating device corresponding to the device identification is adjusted based on the preset ambient brightness.

In this embodiment, when a user uses reading software or a browser of the terminal for a certain duration or longer, it is determined that the terminal is in the reading mode. Then, adjustment of the ambient brightness is triggered. The terminal or the server acquires the preset ambient brightness for the reading mode that is conducive to protecting eyesight and the device identification of the indoor smart illuminating device, and controls the smart illuminating device to adjust its luminance, so that a current ambient brightness reaches the preset ambient brightness. By doing so, a difference between the ambient brightness and a luminance of the terminal's electronic screen is reduced, so that the ambient brightness is more suitable for the user's electronic reading and the user's eyesight can be protected.

In another embodiment, the current indoor ambient brightness is detected to determine whether the luminance of the smart illuminating device needs to be adjusted. Fig. 2 is a flow chart showing a luminance adjusting method according to another embodiment. As shown in Fig. 2, adjusting the luminance of the smart illuminating device corresponding to the device identification based on the preset ambient brightness comprises the following steps.

In step S21, a current ambient brightness of the environment where the terminal is located is acquired.

In step S22, the luminance of the smart illuminating device is adjusted in response to the current ambient brightness differing from the preset ambient brightness.

In this embodiment, if the ambient brightness is lower or higher than the preset ambient brightness, the luminance of the smart illuminating device will be adjusted, so that indoor light will not be too bright or too dark but more suitable for the user's electronic reading and the user's eyesight can be protected.

In another embodiment, when staying in the reading mode, the terminal may periodically adjust the luminance of the smart illuminating device based on the indoor light brightness. Fig. 3 is a flow chart showing a luminance adjusting method according to yet another embodiment. As shown in Fig. 3, adjusting the luminance of the smart illuminating device corresponding to the device identification based on the preset ambient brightness comprises the following steps.

In step S31, a current ambient brightness of the environment where the terminal is located is periodically acquired.

In step S32, the luminance of the smart illuminating device is adjusted based on the current ambient brightness and the preset ambient brightness.

In this embodiment, the difference between the indoor illuminating brightness and the luminance of the terminal's electronic screen is kept small during the user's reading, so that the indoor illuminating brightness is suitable for the user's electronic reading all the time and the user's eyesight can be protected.

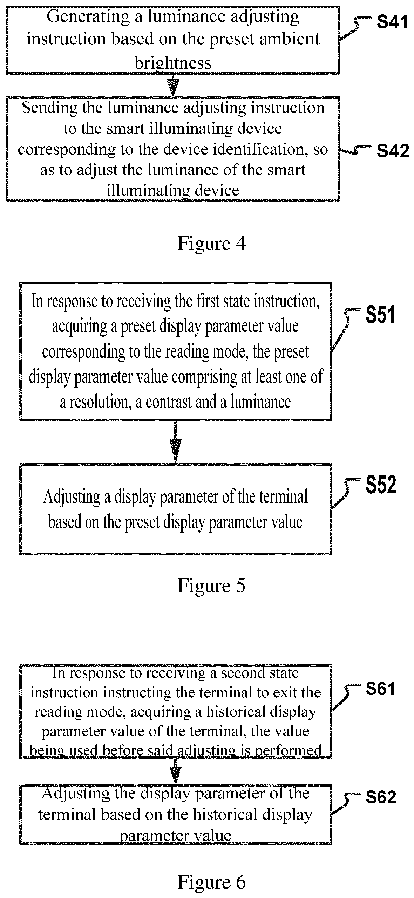

In another embodiment, the terminal or the server may send a luminance adjusting instruction to the smart illuminating device wirelessly, for example, by means of WiFi. Fig. 4 is a flow chart showing a luminance adjusting method according to still another embodiment. As shown in Fig. 4, adjusting the luminance of the smart illuminating device corresponding to the device identification based on the preset ambient brightness comprises the following steps.

In step S41, a luminance adjusting instruction is generated based on the preset ambient brightness.

In step S42, the luminance adjusting instruction is sent to the smart illuminating device corresponding to the device identification, so as to adjust the luminance of the smart illuminating device.

In this embodiment, the luminance of the smart illuminating device is adjusted by the luminance adjusting instruction, so that indoor light will not be too bright or too dark but more suitable for the user's electronic reading and the user's eyesight can be protected.

In another embodiment, if the luminance adjusting instruction is generated by the terminal, then sending the luminance adjusting instruction to the smart illuminating device corresponding to the device identification comprises: sending the luminance adjusting instruction and the device identification to a network, via which the luminance adjusting instruction is forwarded to the smart illuminating device corresponding to the device identification.

In another embodiment, if the luminance of the smart illuminating device is adjusted by the terminal, the method further comprises: generating the first state instruction in response to a time period during which the terminal runs a preset application being longer than or equal to a preset duration.

In addition to adjusting the luminance of the smart illuminating device, the terminal may also adjust its display parameter so as to better protect the user's eyesight. Fig. 5 is a flow chart showing a luminance adjusting method according to still yet another embodiment. As shown in Fig. 5, the method further comprises the following steps.

In step S51, in response to receiving the first state instruction, a preset display parameter value corresponding to the reading mode is acquired, the preset display parameter value comprising at least one of a resolution, a contrast and a luminance.

In step S52, a display parameter of the terminal is adjusted based on the preset display parameter value.

In this embodiment, when the terminal is in the reading mode, it also adjusts its display parameter, such as a resolution, a contrast, a luminance, etc., so that the burden on the user's eyes adapting themselves for reading on the electronic screen can be reduced and the user's eyesight can be protected.

In another embodiment, when the terminal exits the reading mode, the terminal may revert its display parameter to the previous setting. Fig. 6 is a flow chart showing a luminance adjusting method according to yet another embodiment. As shown in Fig. 6, the method further comprises the following steps.

In step S61, in response to receiving a second state instruction instructing the terminal to exit the reading mode, a historical display parameter value of the terminal is acquired, wherein the historical display parameter value is used before said adjusting is performed.

In step S62, the display parameter of the terminal is adjusted based on the historical display parameter value.

In this embodiment, the terminal stores the historical display parameter value which is used before the terminal enters the reading mode, and reverts to the previous display setting based on the stored historical display parameter value when the terminal exits the reading mode, so that the user can use other applications of the terminal conveniently, thereby improving the user experience.

In the following, it is described in detail how a terminal controls a luminance of a smart illuminating device.

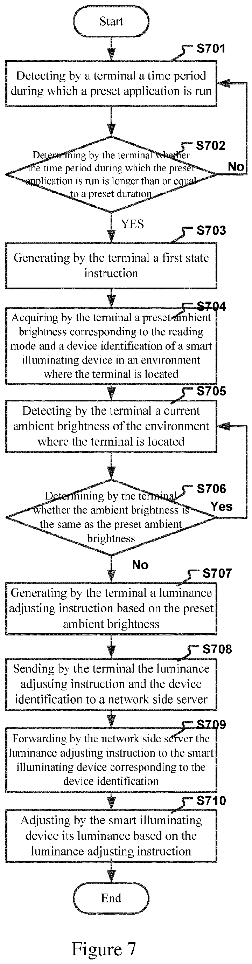

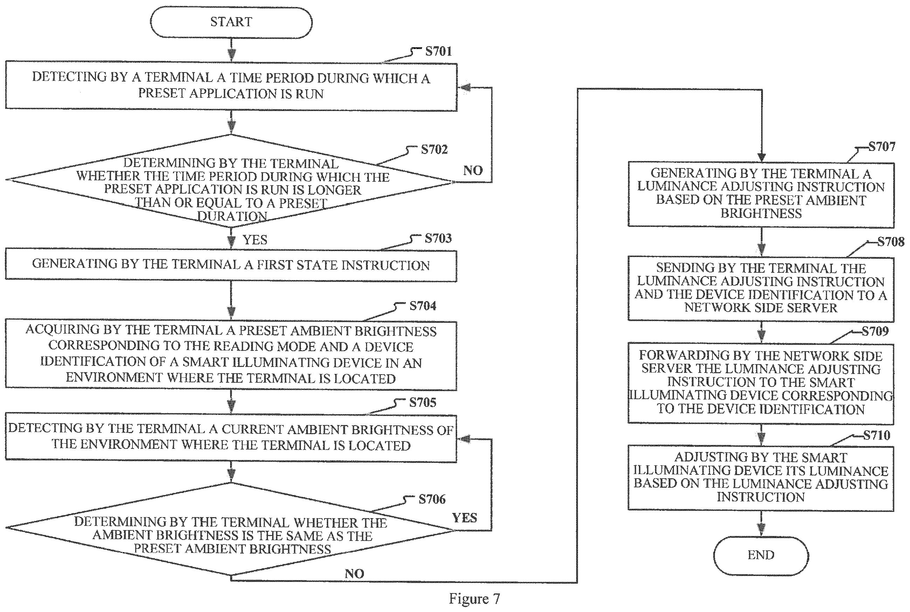

Fig. 7 is a flow chart showing a luminance adjusting method according to yet a further embodiment. As shown in Fig. 7, the method comprises the following steps.

In S701, a terminal detects a time period during which a preset application is run.

In S702, the terminal determines whether the time period during which the preset application is run is longer than or equal to a preset duration. If so, step S703 is executed; if not, step S701 is executed.

In S703, the terminal generates a first state instruction.

In S704, the terminal acquires a preset ambient brightness corresponding to the reading mode and a device identification of a smart illuminating device in an environment where the terminal is located.

In S705, the terminal detects a current ambient brightness of the environment where the terminal is located.

In S706, the terminal determines whether the current ambient brightness is the same as the preset ambient brightness. If so, S705 is executed; if not, step S707 is executed.

In S707, the terminal generates a luminance adjusting instruction based on the preset ambient brightness.

In S708, the terminal sends the luminance adjusting instruction and the device identification to a network side server.

In S709, the network side server forwards the luminance adjusting instruction to the smart illuminating device corresponding to the device identification.

In S710, the smart illuminating device adjusts its luminance based on the luminance adjusting instruction.

In this embodiment, the terminal acquires the preset ambient brightness for the reading mode that is conducive to protecting the user's eyesight and the device identification of the indoor smart illuminating device, and controls the smart illuminating device to adjust its luminance, so that the current ambient brightness reaches the preset ambient brightness. By doing so, a difference between the ambient brightness and a luminance of the terminal's electronic screen is reduced, so that the ambient brightness is more suitable for the user's electronic reading and the user's eyesight can be protected.

In the following, it is described in detail how a network side server controls a luminance of a smart illuminating device.

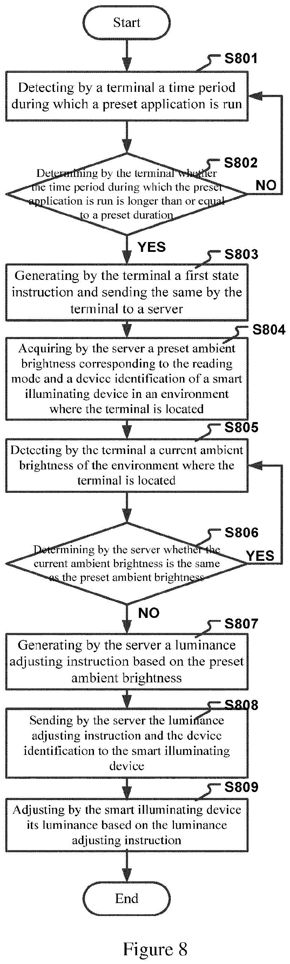

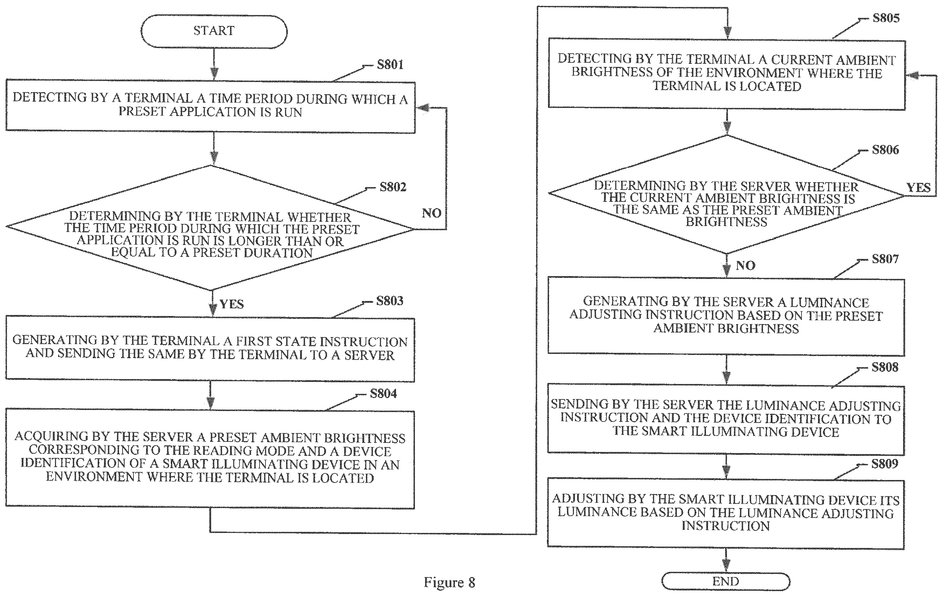

Fig. 8 is a flow chart showing a luminance adjusting method according to yet another embodiment. As shown in Fig. 8, the method comprises the following steps.

In S801, a terminal detects a time period during which a preset application is run.

In S802, the terminal determines whether the time period during which the preset application is run is longer than or equal to a preset duration. If so, S803 is executed; if not, S801 is executed.

In S803, the terminal generates a first state instruction and sends the same to a server.

In S804, the server acquires a preset ambient brightness corresponding to the reading mode and a device identification of a smart illuminating device in an environment where the terminal is located.

In S805, the terminal detects a current ambient brightness of the environment where the terminal is located, and sends the same to the server periodically.

In S806, the server determines whether the current ambient brightness is the same as the preset ambient brightness. If so, step S805 is executed; if not, step S807 is executed.

In S807, the server generates a luminance adjusting instruction based on the preset ambient brightness.

In S808, the server sends the luminance adjusting instruction and the device identification to the smart illuminating device.

In S809, the smart illuminating device adjusts its luminance based on the luminance adjusting instruction.

In this embodiment, the server acquires the preset ambient brightness for the reading mode that is conducive to protecting the user's eyesight and the device identification of the indoor smart illuminating device, and controls the smart illuminating device to adjust its luminance, so that the current ambient brightness reaches the preset ambient brightness. By doing so, a difference between the ambient brightness and a luminance of the terminal's electronic screen is reduced, so that the ambient brightness is more suitable for the user's electronic reading and the user's eyesight can be protected.

In S804, the terminal may send its positional information to the server, so that the server can acquire the device identification of the smart illuminating device corresponding to the positional information. Alternatively, the terminal may send the detected device identification of the smart illuminating device in the environment to the server.

The followings describe apparatus embodiments of this invention, which may be used to perform the method embodiments of this invention.

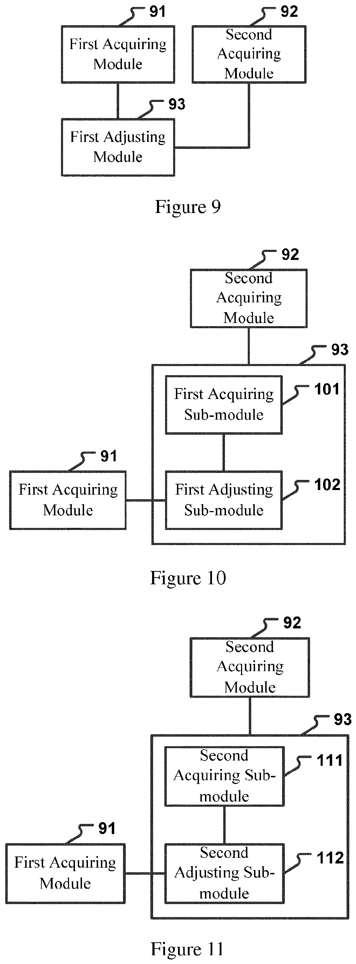

Fig. 9 is a block diagram of a luminance adjusting apparatus according to an embodiment. The apparatus may be realized as an electronic device or part of it in the form of software, hardware or a combination thereof. As shown in Fig. 9, the luminance adjusting apparatus comprises the following components.

A first acquiring module 91 is configured to, in response to receiving a first state instruction instructing a terminal to enter a reading mode, acquire a preset ambient brightness corresponding to the reading mode.

A second acquiring module 92 is configured to acquire a device identification of a smart illuminating device in an environment where the terminal is located.

A first adjusting module 93 is configured to adjust a luminance of the smart illuminating device corresponding to the device identification acquired by the second acquiring module based on the preset ambient brightness acquired by the first acquiring module.

In this embodiment, when a user uses reading software or a browser of the terminal, if the user uses the software or browser for a certain duration or longer, it is determined that the terminal is in the reading mode. Then, adjustment of the ambient brightness is triggered. The terminal or a server acquires the preset ambient brightness for the reading mode that is conducive to protecting the user's eyesight and the device identification of the indoor smart illuminating device, and controls the smart illuminating device to adjust its luminance, so that a current ambient brightness reaches the preset ambient brightness. By doing so, a difference between the ambient brightness and a luminance of the terminal's electronic screen is reduced, so that the ambient brightness is more suitable for the user's electronic reading and the user's eyesight can be protected.

In another embodiment, the current indoor ambient brightness is detected to determine whether the luminance of the smart illuminating device needs to be adjusted. Fig. 10 is a block diagram of a first adjusting module according to an embodiment. As shown in Fig. 10, the first adjusting module 93 comprises the following components.

A first acquiring sub-module 101 is configured to acquire a current ambient brightness of the environment where the terminal is located.

A first adjusting sub-module 102 is configured to adjust the luminance of the smart illuminating device in response to the ambient brightness acquired by the first acquiring sub-module 101 differing from the preset ambient brightness acquired by the first acquiring module 91.

In this embodiment, if the current ambient brightness is lower or higher than the preset ambient brightness, the luminance of the smart illuminating device will be adjusted, so that indoor light will not be too bright or too dark but more suitable for the user's electronic reading and the user's eyesight can be protected.

In another embodiment, when staying in the reading mode, the terminal periodically adjusts the luminance of the smart illuminating device based on the ambient brightness. Fig. 11 is a block diagram of a first adjusting module according to another embodiment. As shown in Fig. 11, the first adjusting module 93 comprises the following components.

A second acquiring sub-module 111 is configured to periodically acquire a current ambient brightness of the environment where the terminal is located.

A second adjusting sub-module 112 is configured to adjust the luminance of the smart illuminating device based on the current ambient brightness acquired by the second acquiring sub-module 111 and the preset ambient brightness acquired by the first acquiring module 91.

In this embodiment, the difference between the indoor illuminating brightness and the luminance of the terminal's electronic screen is kept small during the user's reading, so that the indoor illuminating brightness is suitable for the user's electronic reading all the time and the user's eyesight can be protected.

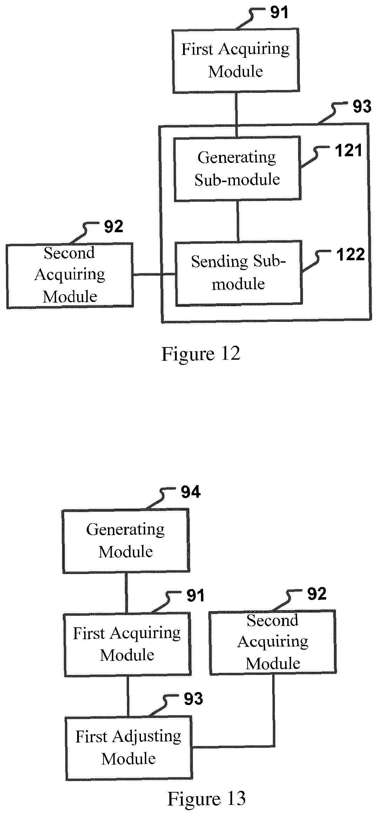

In another embodiment, the terminal or the server may send a luminance adjusting instruction to the smart illuminating device wireless, for example, by means of WiFi Fig. 12 is a block diagram of a first adjusting module according to yet another embodiment. As shown in Fig. 12, the first adjusting module 93 comprises the following components.

A generating sub-module 121 is configured to generate a luminance adjusting instruction based on the preset ambient brightness acquired by the first acquiring module.

A sending sub-module 122 is configured to send the luminance adjusting instruction generated by the generating sub-module 121 to the smart illuminating device corresponding to the device identification, so as to adjust the luminance of the smart illuminating device.

In this embodiment, the luminance of the smart illuminating device is adjusted by the luminance adjusting instruction, so that indoor light will not be too bright or too dark but more suitable for the user's reading and the user's eyesight can be protected.

In another embodiment, if the luminance adjusting instruction is generated by the terminal, the luminance adjusting instruction is sent to the smart illuminating device corresponding to the device identification. Optionally, the sending sub-module 122 is configured to send the luminance adjusting instruction generated by the generating sub-module 121 and the device identification acquired by the second acquiring module 92 to a network, via which the luminance adjusting instruction is forwarded to the smart illuminating device corresponding to the device identification.

In this embodiment, the first adjusting module 93 may comprise all of the first acquiring sub-module 101, the first adjusting sub-module 102, the second acquiring sub-module 111, the second adjusting sub-module 112, the generating sub-module 121 and the sending sub-module 122.

In another embodiment, if the luminance of the smart illuminating device is adjusted by the terminal, the apparatus further comprises, as shown in Fig. 13 which is a block diagram of a luminance adjusting apparatus according to the embodiment, a generating module 94 configured to generate the first state instruction in response to a time period during which the terminal runs a preset application being longer than or equal to a preset duration.

In addition to adjusting the luminance of the smart illuminating device, the terminal may also adjust its display parameter so as to better protect the user's eyesight. Fig. 14 is a block diagram of a luminance adjusting apparatus according to yet another embodiment. As shown in Fig. 14, the apparatus further comprises the following components.

A third acquiring module 95 is configured to, in response to receiving the first state instruction generated by the generating module, acquire a preset display parameter value corresponding to the reading mode, the preset display parameter value comprising at least one of a resolution, a contrast and a luminance.

A second adjusting module 96 is configured to adjust a display parameter of the terminal based on the preset display parameter value acquired by the third acquiring module 95.

In this embodiment, when the terminal is in the reading mode, it also adjusts its display parameter, such as a resolution, a contrast, a luminance, etc., so that the burden on the user's eyes adapting themselves for reading on the electronic screen can be reduced and the user's eyesight can be protected.

In another embodiment, when the terminal exits the reading mode, the terminal may revert its display parameter to the previous setting. Fig. 15 is a block diagram of a luminance adjusting apparatus according to yet another embodiment. As shown in Fig. 15, the apparatus further comprises the following components.

A fourth acquiring module 97 is configured to, in response to receiving a second state instruction instructing the terminal to exit the reading mode, acquire a historical display parameter value of the terminal, the value being used before said adjusting is performed.

The second adjusting module 96 is further configured to adjust the display parameter of the terminal based on the historical display parameter value acquired by the fourth acquiring module 97.

In this embodiment, the terminal stores the historical display parameter value which is used before the terminal enters the reading mode, and reverts to the previous display setting based on the stored historical display parameter value when the terminal exits the reading mode, so that the user can use other applications of the terminal conveniently, thereby improving the user experience.

This invention also provides a luminance adjusting apparatus, comprising a processor and a memory storing instructions executable by the processor. The processor is configured to: in response to receiving a first state instruction instructing a terminal to enter a reading mode, acquire a preset ambient brightness corresponding to the reading mode; acquire a device identification of a smart illuminating device in an environment where the terminal is located; and adjust a luminance of the smart illuminating device corresponding to the device identification, based on the preset ambient brightness.

Fig. 16 is a block diagram of a luminance adjusting apparatus according to yet another embodiment. The apparatus may be applied to a terminal. For example, the apparatus 1700 may be a camera, a sound recording device, mobile phone, a computer, a digital broadcast terminal, a messaging device, a gaming console, a tablet, a medical device, exercise equipment, a personal digital assistant or the like.

The apparatus 1700 may include one or more of the following components: a processing component 1702, a memory 1704, a power component 1706, a multimedia component 1708, an audio component 1710, an input/output (I/O) interface 1712, a sensor component 1714, and a communication component 1716.

The processing component 1702 typically controls overall operations of the apparatus 1700, such as the operations associated with display, telephone calls, data communications, camera operations, and recording operations. The processing component 1702 may include one or more processors 1720 to execute instructions to perform all or part of the steps in the above described methods. Moreover, the processing component 1702 may include one or more modules which facilitate the interaction between the processing component 1702 and other components. For instance, the processing component 1702 may include a multimedia module to facilitate the interaction between the multimedia component 1708 and the processing component 1702.

The memory 1704 is configured to store various types of data to support the operation of the apparatus 1700. Examples of such data include instructions for any applications or methods operated on the apparatus 1700, contact data, phonebook data, messages, pictures, video, etc. The memory 1704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1706 provides power to various components of the apparatus 1700. The power component 1706 may include a power management system, one or more power sources, and any other components associated with the generation, management, and distribution of power in the apparatus 1700.

The multimedia component 1708 includes a screen providing an output interface between the apparatus 1700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1708 includes a front camera and/or a rear camera. The front camera and the rear camera may receive an external multimedia datum while the apparatus 1700 is in an operation mode, such as a photographing mode or a video mode. Each of the front camera and the rear camera may be a fixed optical lens system or have focus and optical zoom capability.

The audio component 1710 is configured to output and/or input audio signals. For example, the audio component 1710includesa microphone ("MIC") configured to receive an external audio signal when the apparatus 1700 is in an operation mode, such as a call mode, a recording mode, and a voice recognition mode. The received audio signal may be further stored in the memory 1704 or transmitted via the communication component 1716. In some embodiments, the audio component 1710 further includes a speaker to output audio signals.

The I/O interface 1712 provides an interface between the processing component 1702 and peripheral interface modules, such as a keyboard, a click wheel, buttons, and the like. The buttons may include, but are not limited to, a home button, a volume button, a starting button, and a locking button.

The sensor component 1714 includes one or more sensors to provide status assessments of various aspects of the apparatus 1700. For instance, the sensor component 1714 may detect an open/closed status of the apparatus 1700, relative positioning of components, e.g., the display and the keypad, of the apparatus 1700, a change in position of the apparatus 1700 or a component of the apparatus 1700, a presence or absence of user contact with the apparatus 1700, an orientation or an acceleration/deceleration of the apparatus 1700, and a change in temperature of the apparatus 1700. The sensor component 1714 may include a proximity sensor configured to detect the presence of nearby objects without any physical contact. The sensor component 1714 may also include a light sensor, such as a CMOS or CCD image sensor, for use in imaging applications. In some embodiments, the sensor component 1714 may also include an accelerometer sensor, a gyroscope sensor, a magnetic sensor, a pressure sensor, or a temperature sensor.

The communication component 1716 is configured to facilitate communication, wired or wirelessly, between the apparatus 1700 and other devices. The apparatus 1700 can access a wireless network based on a communication standard, such as WiFi, 2G, or 3G, or a combination thereof. In one embodiment, the communication component 1716 receives a broadcast signal or broadcast associated information from an external broadcast management system via a broadcast channel. In one embodiment, the communication component 1716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In some embodiments, the apparatus 1700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In an embodiment, there is also provided a non-transitory computer readable storage medium including instructions, such as included in the memory 1704, executable by the processor 1720 in the apparatus 1700, for performing the above-described methods. For example, the non-transitory computer readable storage medium may be a ROM, a RAM, a CD-ROM, a magnetic tape, a floppy disc, an optical data storage device, and the like.

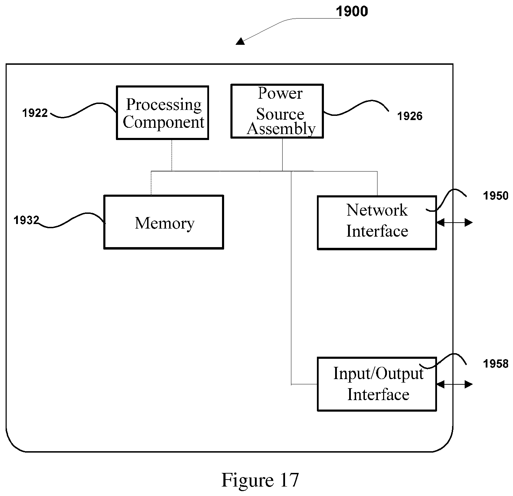

Fig. 17 is a block diagram of a luminance adjusting apparatus according to yet another embodiment. For example, the smart device grouping apparatus 1900 may be provided as a server. The apparatus 1900 includes a processing component 1922 which further includes one or more processors, and memory resources represented by a memory 1932 for storing instructions executable by the processing component 1922 such as applications. The applications stored in the memory 1932 may include one or more modules, each corresponding to a set of instructions. The processing component 1922 is configured to execute instructions so as to perform the above method.

The apparatus 1900 may also include a power source assembly 1926 which is configured to execute power management for the apparatus 1900, a wired or wireless network interface 1950 which is configured to connect the apparatus 1900 to a network, and an input/output (I/O) interface 1958. The apparatus 1900 can operate the operation system stored in the memory 1932, for example, Windows Server™, Mac OS X™, Unix™, Linux™, Free BSD™ or the like.

There is provided a non-transitory computer-readable storage medium having stored therein instructions that, when executed by a processor of the apparatus 1700 or 1900, causes the apparatus 1700 or 1900 to perform the above described luminance adjusting method, comprising: in response to receiving a first state instruction instructing a terminal to enter a reading mode, acquiring a preset ambient brightness corresponding to the reading mode; acquiring a device identification of a smart illuminating device in an environment where the terminal is located; and adjusting a luminance of the smart illuminating device corresponding to the device identification, based on the preset ambient brightness.

Optionally, said adjusting the luminance of the smart illuminating device corresponding to the device identification based on the preset ambient brightness comprises acquiring a current ambient brightness of the environment where the terminal is located and adjusting the luminance of the smart illuminating device in response to the current ambient brightness differing from the preset ambient brightness.

Optionally, said adjusting the luminance of the smart illuminating device corresponding to the device identification based on the preset ambient brightness comprises periodically acquiring a current ambient brightness of the environment where the terminal is located and adjusting the luminance of the smart illuminating device based on the current ambient brightness and the preset ambient brightness.

Optionally, said adjusting the luminance of the smart illuminating device corresponding to the device identification based on the preset ambient brightness comprises generating a luminance adjusting instruction based on the preset ambient brightness, and sending the luminance adjusting instruction to the smart illuminating device corresponding to the device identification so as to adjust the luminance of the smart illuminating device.

Optionally, said sending the luminance adjusting instruction to the smart illuminating device corresponding to the device identification comprises sending the luminance adjusting instruction and the device identification to a network, via which the luminance adjusting instruction is forwarded to the smart illuminating device.

Optionally, the method further comprises generating the first state instruction in response to a time period during which the terminal runs a preset application being longer than or equal to a preset duration.

Optionally, the method further comprises: in response to receiving the first state instruction, acquiring a preset display parameter value corresponding to the reading mode, the preset display parameter value comprising at least one of a resolution, a contrast and a luminance; and adjusting a display parameter of the terminal based on the preset display parameter value.

Optionally, the method further comprises: in response to receiving a second state instruction instructing the terminal to exit the reading mode, acquiring a historical display parameter value of the terminal, the value being used before said adjusting is performed; and adjusting the display parameter of the terminal based on the historical display parameter value.

Other embodiments of the invention will be apparent to those skilled in the art from consideration of the specification and practice of the invention defined by the claims. This application is intended to cover any variations, uses, or adaptations of the invention following the general principles thereof and including such departures from the present invention as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A luminance adjusting method for adjusting a luminance of a luminance-adjustable illuminating device in an indoor environment where a terminal comprising a display is located, performed by a terminal, **characterized by** comprising:
generating a first state instruction in response to a time period during which the terminal runs a preset application being longer than or equal to a preset duration;
in response to receiving the first state instruction instructing the terminal to enter a reading mode where a user reads using the terminal display, acquiring (S11) a preset ambient brightness corresponding to the reading mode which is suitable for the user's reading;
acquiring (S12) a device identification of the luminance-adjustable illuminating devicein the indoor environment where the terminal is located; and
adjusting (S13) the luminance of the luminance-adjustable illuminating device corresponding to the device identification, based on the preset ambient brightness,
wherein said adjusting the luminance of the luminance-adjustable illuminating device corresponding to the device identification based on the preset ambient brightness comprises:
acquiring (S21) a current ambient brightness of the indoor environment where the terminal is located; and
adjusting (S22) the luminance of the luminance-adjustable illuminating device in response to the current ambient brightness differing from the preset ambient brightness.

2. The method of claim 1, wherein said adjusting the luminance of the luminance-adjustable illuminating device corresponding to the device identification based on the preset ambient brightness comprises:
generating (S41) a luminance adjusting instruction based on the preset ambient brightness, and
sending (S42) the luminance adjusting instruction to the luminance-adjustable illuminating device corresponding to the device identification, so as to adjust the luminance of the luminance-adjustable illuminating device.

3. The method of claim 2, wherein said sending the luminance adjusting instruction to the luminance-adjustable illuminating device corresponding to the device identification comprises:
sending the luminance adjusting instruction and the device identification to a network, via which the luminance adjusting instruction is forwarded to the luminance-adjustable illuminating device.

4. The method of any one of the preceding claims, further comprising:
in response to receiving the first state instruction, acquiring (S51) a preset display parameter value corresponding to the reading mode, the preset display parameter value comprising at least one of a resolution, a contrast and a luminance; and
adjusting (S52) a display parameter of the terminal based on the preset display parameter value.

5. The method of any one of the preceding claims, further comprising:
in response to receiving a second state instruction instructing the terminal to exit the reading mode, acquiring (S61) a historical display parameter value of the terminal, the value being used before said adjusting is performed; and
adjusting (S62) the display parameter of the terminal based on the historical display parameter value.

6. A terminal for adjusting a luminance of a luminance-adjustable illuminating device in an indoor environment where the terminal is located, **characterized by** comprising:
a terminal display
a generating module configured to generate a first state instruction in response to a time period during which the terminal runs a preset application being longer than or equal to a preset duration; a first acquiring module (91) configured to, in response to receiving the first state instruction instructing the terminal to enter a reading mode where a user reads using the terminal display, acquire a preset ambient brightness corresponding to the reading mode which is suitable for the user's reading;
a second acquiring module (92) configured to acquire a device identification of the luminance-adjustable illuminating device in the indoor environment where the terminal is located; and
a first adjusting module (93) configured to adjust a luminance of the luminance-adjustable illuminating device corresponding to the device identification acquired by the second acquiring module, based on the preset ambient brightness acquired by the first acquiring module,
wherein the first adjusting module comprises:
a first acquiring sub-module (101) configured to acquire a current ambient brightness of the indoor environment where the terminal is located, and
a first adjusting sub-module (102) configured to adjust the luminance of the luminance-adjustable illuminating device in response to the current ambient brightness acquired by the first acquiring sub-module differing from the preset ambient brightness acquired by the first acquiring module.

7. The terminal of claim 6, wherein the first adjusting module (93) comprises:
a generating sub-module (121) configured to generate a luminance adjusting instruction based on the preset ambient brightness acquired by the first acquiring module, and
a sending sub-module (122) configured to send the luminance adjusting instruction generated by the generating sub-module to the luminance-adjustable illuminating device corresponding to the device identification, so as to adjust the luminance of the luminance-adjustable illuminating device.

8. A computer program including instructions for executing the steps of a luminance adjusting method according to any one of claims 1 to 5, when said program is executed by a computer.

9. A recording medium readable by a computer and having recorded thereon a computer program according to claim 8.

## Patentansprüche

1. Luminanzeinstellverfahren zum Einstellen einer Luminanz einer Beleuchtungsvorrichtung mit einstellbarer Luminanz in einer Innenumgebung, in der ein Endgerät mit einem Display angeordnet ist, durchgeführt von einem Endgerät, **dadurch gekennzeichnet, dass** es umfasst:
Erzeugen einer ersten Zustandsanweisung als Reaktion auf eine Zeitperiode, während der das Endgerät eine voreingestellte Anwendung ausführt, die länger als oder gleich einer voreingestellten Dauer ist;
als Reaktion auf den Empfang der ersten Zustandsanweisung, die das Endgerät anweist, in einen Lesemodus einzutreten, in dem ein Benutzer unter Verwendung des Endgerätedisplays liest, Erfassen (S11) einer voreingestellten Umgebungshelligkeit, die dem Lesemodus entspricht, der für das Lesen des Benutzers geeignet ist;
Erfassen (S12) einer Vorrichtungskennung der Beleuchtungsvorrichtung mit einstellbarer Luminanz in der Innenumgebung, in der sich das Endgerät befindet; und
Einstellen (S13) der Luminanz der Beleuchtungsvorrichtung mit einstellbarer Luminanz entsprechend der Vorrichtungskennung, basierend auf der voreingestellten Umgebungshelligkeit,
wobei das Einstellen der Luminanz der Beleuchtungsvorrichtung mit einstellbarer Luminanz entsprechend der Vorrichtungskennung auf der Grundlage der voreingestellten Umgebungshelligkeit folgendes umfasst:
Erfassen (S21) einer aktuellen Umgebungshelligkeit der Innenumgebung, in der sich das Endgerät befindet; und
Einstellen (S22) der Luminanz der Beleuchtungsvorrichtung mit einstellbarer Luminanz als Reaktion auf die aktuelle Umgebungshelligkeit, die von der voreingestellten Umgebungshelligkeit abweicht.

2. Verfahren nach Anspruch 1, wobei das Einstellen der Luminanz der Beleuchtungsvorrichtung mit einstellbarer Luminanz entsprechend der Vorrichtungskennung auf der Grundlage der voreingestellten Umgebungshelligkeit folgendes umfasst:
Erzeugen (S41) einer Luminanz-Einstellanweisung auf der Grundlage der voreingestellten Umgebungshelligkeit, und
Senden (S42) der Luminanz-Einstellanweisung an die der Vorrichtungskennung entsprechende Beleuchtungsvorrichtung mit einstellbarer Luminanz, um die Luminanz der Beleuchtungsvorrichtung mit einstellbarer Luminanz einzustellen.

3. Verfahren nach Anspruch 2, bei dem das Senden der Anweisung zur Einstellung der Luminanz an die Beleuchtungsvorrichtung mit einstellbarer Luminanz, die der Vorrichtungskennung entspricht, folgendes umfasst:
Senden der Anweisung zur Einstellung der Luminanz und der Vorrichtungskennung an ein Netz, über das die Anweisung zur Einstellung der Luminanz an die Beleuchtungsvorrichtung mit einstellbarer Luminanz weitergeleitet wird.

4. Verfahren nach einem der vorstehenden Ansprüche, ferner umfassend:
als Reaktion auf den Empfang der ersten Zustandsanweisung, Erfassen (S51) eines voreingestellten Displayparameterwerts, der dem Lesemodus entspricht, wobei der voreingestellte Displayparameterwert mindestens eines von einer Auflösung, einem Kontrast und einer Luminanz umfasst; und
Einstellen (S52) eines Displayparameters des Endgerätes auf der Grundlage des voreingestellten Displayparameterwerts.

5. Verfahren nach einem der vorstehenden Ansprüche, ferner umfassend:
als Reaktion auf den Empfang einer zweiten Zustandsanweisung, der das Endgerät anweist, den Lesemodus zu verlassen, Erfassen (S61) eines historischen Displayparameterwertes des Endgerätes, wobei der Wert verwendet wird, bevor das Einstellen durchgeführt wird; und
Einstellen (S62) des Displayparameters des Endgerätes auf der Grundlage des historischen Di splayparameterwertes.

6. Endgerät zum Einstellen einer Luminanz einer Beleuchtungsvorrichtung mit einstellbarer Luminanz in einer Innenumgebung, in der sich das Endgerät befindet, **dadurch gekennzeichnet, dass** es umfasst:
ein Endgerätedisplay
ein Erzeugungsmodul, das so konfiguriert ist, dass es eine erste Zustandsanweisung als Reaktion auf eine Zeitperiode erzeugt, während der das Endgerät eine voreingestellte Anwendung ausführt, die länger als oder gleich einer voreingestellten Dauer ist;
ein erstes Erfassungsmodul (91), das so konfiguriert ist, dass es als Reaktion auf das Empfangen der ersten Zustandsanweisung, die das Endgerät anweist, in einen Lesemodus einzutreten, in dem ein Benutzer unter Verwendung des Endgerätedisplays liest, eine voreingestellte Umgebungshelligkeit erfasst, die dem Lesemodus entspricht, der für das Lesen des Benutzers geeignet ist;
ein zweites Erfassungsmodul (92), das konfiguriert ist, um eine Vorrichtungskennung der Beleuchtungsvorrichtung mit einstellbarer Luminanz in der Innenumgebung zu erfassen, in der sich das Endgerät befindet; und
ein erstes Einstellmodul (93), das so konfiguriert ist, dass es eine Luminanz der Beleuchtungsvorrichtung mit einstellbarer Luminanz entsprechend der durch das zweite Erfassungsmodul erfassten Vorrichtungskennung auf der Grundlage der durch das erste Erfassungsmodul erfassten voreingestellten Umgebungshelligkeit einstellt,
wobei das erste Einstellmodul folgendes aufweist:
ein erstes Erfassungsuntermodul (101), das konfiguriert ist, um eine aktuelle Umgebungshelligkeit der Innenumgebung zu erfassen, in der sich das Endgerät befindet, und
ein erstes Einstelluntermodul (102), das konfiguriert ist, um die Luminanz der Beleuchtungsvorrichtung mit einstellbarer Luminanz als Reaktion auf die aktuelle Umgebungshelligkeit einzustellen, die von dem ersten Erfassungsuntermodul erfasst wird und sich von der voreingestellten Umgebungshelligkeit unterscheidet, die von dem ersten Erfassungsmodul erfasst wird.

7. Endgerät nach Anspruch 6, wobei das erste Einstellmodul (93) folgendes aufweist:
ein Erzeugungsuntermodul (121), das konfiguriert ist, um eine Luminanzeinstellanweisung basierend auf der voreingestellten Umgebungshelligkeit zu erzeugen, die durch das erste Erfassungsmodul erfasst wird, und
ein Sendeuntermodul (122), das konfiguriert ist, um die von dem erzeugenden Untermodul erzeugte Luminanz-Einstellanweisung entsprechend der Vorrichtungskennung an die Beleuchtungsvorrichtung mit einstellbarer Luminanz zu senden, um die Luminanz der Beleuchtungsvorrichtung mit einstellbarer Luminanz einzustellen.

8. Computerprogramm mit Anweisungen zur Ausführung der Schritte eines Luminanzeinstellverfahrens nach einem der Ansprüche 1 bis 5, wenn das Programm von einem Computer ausgeführt wird.

9. Aufzeichnungsmedium, das von einem Computer lesbar ist und auf dem ein Computerprogramm nach Anspruch 8 aufgezeichnet ist.

## Revendications

1. Procédé de réglage de luminance pour régler une luminance d'un dispositif d'éclairage à luminance réglable dans un environnement intérieur où se situe un terminal comportant un affichage, mis en œuvre par un terminal, **caractérisé en ce qu'**il comporte les étapes consistant à :
générer une première instruction d'état en réponse à une période de temps pendant laquelle le terminal exécute une application prédéfinie étant plus longue ou égale à une durée prédéfinie ;
en réponse à la réception de la première instruction d'état ordonnant au terminal d'entrer dans un mode de lecture où un utilisateur lit en utilisant l'affichage de terminal, acquérir (S11) une luminosité ambiante prédéfinie correspondant au mode de lecture qui est adapté pour la lecture de l'utilisateur ;
acquérir (S12) une identification de dispositif du dispositif d'éclairage à luminance réglable dans l'environnement intérieur où le terminal est situé ; et
régler (S13) la luminance du dispositif d'éclairage à luminance réglable correspondant à l'identification de dispositif, sur la base de la luminosité ambiante prédéfinie,
dans lequel ledit réglage de la luminance du dispositif d'éclairage à luminance réglable correspondant à l'identification de dispositif sur la base de la luminosité ambiante prédéfinie comporte les étapes consistant à :
acquérir (S21) une luminosité ambiante actuelle de l'environnement intérieur où le terminal se situe ; et régler (S22) la luminance du dispositif d'éclairage à luminance réglable en réponse à la luminosité ambiante actuelle qui diffère de la luminosité ambiante prédéfinie.

2. Procédé selon la revendication 1, dans lequel ledit réglage de la luminance du dispositif d'éclairage à luminance réglable correspondant à l'identification de dispositif sur la base de la luminosité ambiante prédéfinie comporte les étapes consistant à :
générer (S41) une instruction de réglage de luminance sur la base de la luminosité ambiante prédéfinie, et
envoyer (S42) l'instruction de réglage de luminance au dispositif d'éclairage à luminance réglable correspondant à l'identification de dispositif, de manière à régler la luminance du dispositif d'éclairage à luminance réglable.

3. Procédé selon la revendication 2, dans lequel ledit envoi de l'instruction de réglage de luminance au dispositif d'éclairage à luminance réglable correspondant à l'identification de dispositif comporte l'étape consistant à :
envoyer l'instruction de réglage de luminance et l'identification de dispositif à un réseau, via lequel l'instruction de réglage de luminance est transférée au dispositif d'éclairage à luminance réglable.

4. Procédé selon l'une quelconque des revendications précédentes, comportant en outre les étapes consistant à :
en réponse à la réception de la première instruction d'état, acquérir (S51) une valeur de paramètre d'affichage prédéfinie correspondant au mode de lecture, la valeur de paramètre d'affichage prédéfinie comportant au moins un élément parmi une résolution, un contraste et une luminance ; et
régler (S52) un paramètre d'affichage du terminal sur la base de la valeur de paramètre d'affichage prédéfinie.

5. Procédé selon l'une quelconque des revendications précédentes, comportant en outre les étapes consistant à :
en réponse à la réception d'une seconde instruction d'état ordonnant au terminal de sortir du mode de lecture, acquérir (S61) une valeur de paramètre d'affichage historique du terminal, la valeur étant utilisée avant que ledit réglage soit réalisé ; et
régler (S62) le paramètre d'affichage du terminal sur la base de la valeur de paramètre d'affichage historique.

6. Terminal pour régler une luminance d'un dispositif d'éclairage à luminance réglable dans un environnement intérieur où le terminal se situe, **caractérisé en ce qu'**il comporte :
un terminal d'affichage,
un module de génération configuré pour générer une première instruction d'état en réponse à une période de temps pendant laquelle le terminal exécute une application prédéfinie étant plus longue ou égale à une durée prédéfinie ; un premier module d'acquisition (91) configuré pour, en réponse à la réception de la première instruction d'état ordonnant au terminal d'entrer dans un mode de lecture où un utilisateur lit en utilisant l'affichage de terminal, acquérir une luminosité ambiante prédéfinie correspondant au mode de lecture qui est adapté pour la lecture de l'utilisateur ;
un second module d'acquisition (92) configuré pour acquérir une identification de dispositif du dispositif d'éclairage à luminance réglable dans l'environnement intérieur où le terminal se situe ; et
un premier module de réglage (93) configuré pour régler une luminance du dispositif d'éclairage à luminance réglable correspondant à l'identification de dispositif acquise par le second module d'acquisition, sur la base de la luminosité ambiante prédéfinie acquise par le premier module d'acquisition,
dans lequel le premier module de réglage comporte :
un premier sous-module d'acquisition (101) configuré pour acquérir une luminosité ambiante actuelle de l'environnement intérieur où le terminal se situe, et
un premier sous-module de réglage (102) configuré pour régler la luminance du dispositif d'éclairage à luminance réglable en réponse à la luminosité ambiante actuelle acquise par le premier sous-module d'acquisition qui diffère de la luminosité ambiante prédéfinie acquise par le premier module d'acquisition.

7. Terminal selon la revendication 6, dans lequel le premier module de réglage (93) comporte :
un sous-module de génération (121) configuré pour générer une instruction de réglage de luminance sur la base de la luminosité ambiante prédéfinie acquise par le premier module d'acquisition, et
un sous-module d'envoi (122) configuré pour envoyer l'instruction de réglage de luminance générée par le sous-module de génération au dispositif d'éclairage à luminance réglable correspondant à l'identification de dispositif, de manière à régler la luminance du dispositif d'éclairage à luminance réglable.

8. Programme informatique incluant des instructions pour exécuter les étapes d'un procédé de réglage de luminance selon l'une quelconque des revendications 1 à 5, lorsque ledit programme est exécuté par un ordinateur.

9. Support d'enregistrement lisible par un ordinateur et sur lequel est enregistré un programme informatique selon la revendication 8.
